# EUROPEAN PATENT APPLICATION

(11) **EP 3 779 255 A1**
(43) Date of publication of application: **17.02.2021**
(21) Application number: 19776106.7
(22) Date of filing: 25.03.2019
(51) Int. Cl.: F16K 47/02, F16K 15/02

(54) **CHECK VALVE**

(30) Priority: 27.03.2018 JP 2018060513
(71) Applicant: Kawasaki Jukogyo Kabushiki Kaisha, Hyogo 650-8670 (JP)
(72) Inventor: NAKAMURA, Noritaka, Kobe-shi Hyogo 650-8670 (JP); KATO, Kodai, Kobe-shi Hyogo 650-8670 (JP); KIYOSE, Hiromitsu, Kobe-shi Hyogo 650-8670 (JP); SAKATA, Yukinobu, Kobe-shi Hyogo 650-8670 (JP)
(74) Representative: Dehns
(86) International application number: PCT/JP2019/012426
(87) International publication number: WO 2019/188947

(57) **Abstract**

There is provided a check valve capable of being reduced in size and suppressing the generation of chattering. A check valve includes: a seat member arranged at a channel of a fluid, the seat member including a large-diameter portion, a small-diameter portion, and a seat portion, the large-diameter portion and the small-diameter portion being provided at an inner periphery of the seat member, the seat portion being provided between the large-diameter portion and the small-diameter portion; a valve element pressed against the seat portion to close the channel; and a casing including a valve chest accommodating the valve element such that the valve element is movable in an axial direction. The large-diameter portion has an inner diameter larger than an outer diameter of the valve element which enters into the large-diameter portion in the axial direction. A space through which the fluid flows is formed between the large-diameter portion and the valve element. The diameter of the large-diameter portion is equal to or less than 1.2 times the diameter of the valve element.

## Description

### Technical Field

The present invention relates to a check valve included in a channel through which a fluid, such as high-pressure gas, flows.

### Background Art

Conventionally, a check valve is provided in a pipe through which high-pressure gas or the like flows, to prevent the high-pressure gas from flowing backward. The check valve is opened or closed by a pressure difference between an upstream side and a downstream side. Therefore, when the check valve is provided at a place where pressure fluctuation frequently occurs, chattering tends to occur, i.e., the check valve tends to repeatedly open and close in a short cycle. One example as conventional art of this type of check valve is a check valve configured such that: an outflow port is open at a sleeve covering a periphery of a valve element; and when the valve element separates from a valve seat by a predetermined distance, a fluid inflow portion and a communication channel communicate with each other (see PTL 1, for example).

This check valve is configured such that even when a head portion of the valve element separates from the valve seat, the fluid inflow portion and the outflow port of the sleeve do not communicate with each other until an axial movement distance of the valve element becomes a predetermined axial movement distance (hereinafter may be referred to as a "lift amount"). When the axial movement distance of the valve element increases, and the outflow port of the sleeve communicates with the fluid inflow portion, the fluid flows. With this, the fluid flows from a position where the valve element separates from the valve seat. Therefore, even when valve vibration occurs, the chattering hardly occurs, i.e., the valve element and the valve seat hardly collide with each other.

### Citation List

### Patent Literature

PTL 1: Japanese Laid-Open Patent Application Publication No. 2005-291409

### Summary of Invention

### Technical Problem

However, the above check valve requires the sleeve in addition to the valve element and the valve seat. Therefore, the number of components of the check valve increases, and the check valve needs to be increased in size. Moreover, a channel needs to be provided at a radially outer side of the sleeve, and thus, the check valve needs to be increased in size. Furthermore, since the valve element slides inside the sleeve, dimensional accuracy of the valve element and the sleeve is important, and therefore, machining and assembling require labor and cost.

The fluid does not flow through portions other than the outflow port of the sleeve. Therefore, when it is necessary to increase a required maximum opening area, the check valve needs to be increased in size in a radial direction or an axial direction. In addition, when the fluid flows through the check valve, the fluid flows through a narrow channel between the sleeve and a casing and a narrow channel between the sleeve and a member supporting the sleeve. Therefore, pressure loss tends to become large when the valve element is maximally open. To reduce the pressure loss, the check valve needs to be further increased in size.

An object of the present invention is to provide a check valve which can be reduced in size and can suppress the generation of chattering.

### Solution to Problem

To achieve the above object, a check valve according to the present invention includes: a seat member arranged at a channel of a fluid, the seat member including a large-diameter portion, a small-diameter portion, and a seat portion, the large-diameter portion and the small-diameter portion being provided at an inner periphery of the seat member, the seat portion being provided between the large-diameter portion and the small-diameter portion; a valve element pressed against the seat portion to close the channel; and a casing including a valve chest accommodating the valve element such that the valve element is movable in an axial direction. The large-diameter portion has an inner diameter larger than an outer diameter of the valve element which enters into the large-diameter portion in the axial direction. A space through which the fluid flows is formed between the large-diameter portion and the valve element. The diameter of the large-diameter portion is equal to or less than 1.2 times the diameter of the valve element. In the present description and the claims, the "space" denotes a space which is located between an outer peripheral portion of the valve element and the large-diameter portion and is continuous in the axial direction.

According to this configuration, in a period from when the valve element separates from the seat portion of the seat member until when the axial movement distance of the valve element reaches a predetermined axial movement distance, the fluid flows through the space at a low flow rate. This can prevent a case where upstream pressure excessively increases by a valve passing flow rate that increases in accordance with the movement of the valve element. When the axial movement distance of the valve element reaches the predetermined axial movement distance, the flow rate of the fluid changes from the low flow rate to a high flow rate. With this, a position where the valve element moves in the axial direction by the change in the fluid pressure, i.e., a position where the flow rate increases can be set to a position away from the seat portion. Thus, the generation of the chattering can be suppressed. In addition, the check valve capable of suppressing the generation of the chattering can be reduced in the number of components and can be configured as a small check valve.

Moreover, a check valve may include: a seat member arranged at a channel of a fluid, the seat member including a large-diameter portion, a small-diameter portion, and a seat portion, the large-diameter portion and the small-diameter portion being provided at an inner periphery of the seat member, the seat portion being provided between the large-diameter portion and the small-diameter portion; a valve element pressed against the seat portion to close the channel; and a casing including a valve chest accommodating the valve element such that the valve element is movable in an axial direction. The large-diameter portion may have an inner diameter larger than an outer diameter of the valve element which enters into the large-diameter portion in the axial direction. A space through which the fluid flows may be formed between the large-diameter portion and the valve element. A peripheral wall of the large-diameter portion may include an additional passage having a sectional area that increases from an upstream side toward a downstream side along flow of the fluid.

According to this configuration, the flow rate of the fluid flowing through the additional passage is added to the low flow rate of the fluid flowing through the space when the valve element separates from the seat portion of the seat member. A sectional area of the additional passage can be increased at any increase ratio from the upstream side toward the downstream side. Therefore, the flow rate can be increased at any increase ratio in accordance with the movement of the valve element in the axial direction. With this, after the valve element separates from the seat portion of the seat member, the flow rate can be arbitrarily gently increased in accordance with the movement of the valve element in the axial direction. On this account, since the increase ratio of the flow rate in accordance with the movement of the valve element in the axial direction can be changed appropriately gently, the generation of the chattering can be effectively suppressed.

The additional passage may include a plurality of additional passages arranged symmetrically about a center axis of the large-diameter portion.

According to this configuration, the fluid flowing from the space between the valve element and the seat portion of the seat member to the additional passages can be balanced with respect to the center axis of the valve element. Therefore, the valve element can easily move along the center axis.

An end portion of the large-diameter portion which end portion is located opposite to the seat portion may be curved at an arbitrary curvature so as to spread outward in a radial direction as the end portion of the large-diameter portion extends away from the seat portion.

According to this configuration, the change in the opening area when the valve element moves in the axial direction to separate from the seat portion or the casing can be made smoother at the curved portion. With this, the increase ratio of the flow rate can be made gentle at the portion where the opening area is large.

### Advantageous Effects of Invention

According to the present invention, the check valve configured such that increase properties of the opening area and the flow rate in accordance with the movement of the valve element in the axial direction can be set more preferably to prevent the generation of the chattering can be reduced in the number of components and can be configured as a small check valve.

### Brief Description of Drawings

FIG. 1 is a sectional view showing an entire configuration of a first check valve according to Embodiment 1 of the present invention.
FIG. 2A is a sectional view showing a seat member and valve element of the first check valve shown in FIG. 1, and FIG. 2B shows a modified example thereof.
FIGS. 3A to 3D are diagrams showing the flow of a fluid when the valve element separates from a seat portion of the seat member in the first check valve.
FIG. 4 is a graph showing an opening area property of the first check valve shown in FIGS. 3A to 3D.
FIG. 5 is a sectional view showing a seat member and valve element of a second check valve according to Embodiment 2 of the present invention.
FIG. 6 is a sectional view taken along line VI-VI of FIG. 5.
FIGS. 7A to 7E are diagrams showing the flow of the fluid when the valve element separates from a seat portion of the seat member in the second check valve.
FIG. 8 is a graph showing the opening area property of the second check valve shown in FIGS. 7A to 7E.
FIG. 9 is a sectional view showing a seat member and valve element of a third check valve according to Embodiment 3 of the present invention.
FIG. 10 is a sectional view showing a seat member and valve element of a fourth check valve according to Embodiment 4 of the present invention.
FIGS. 11A to 11C are diagrams showing the flow of the fluid when the valve element separates from a seat portion of the seat member in the fourth check valve.
FIG. 12 is a sectional view showing a seat member and valve element of a fifth check valve according to Embodiment 5 of the present invention.

### Description of Embodiments

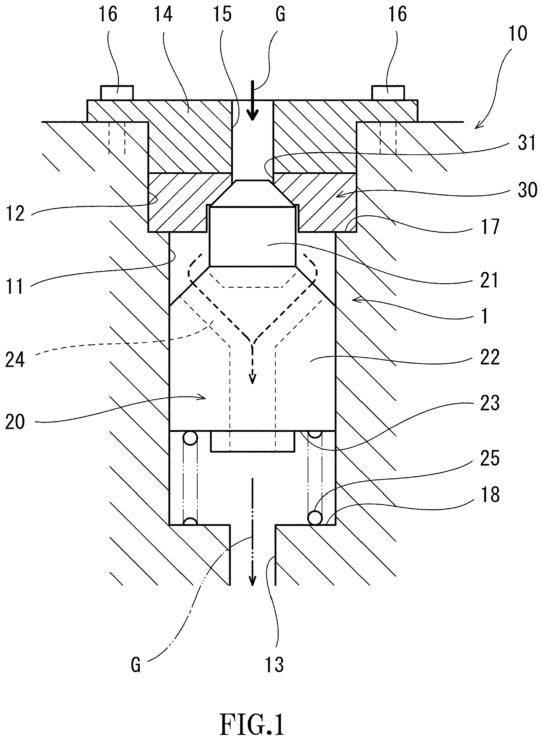

Hereinafter, embodiments of the present invention will be described based on the drawings. The following embodiments will describe an example in which: an upper side in the drawings corresponds to an upstream side; a lower side in the drawings corresponds to a downstream side; and a fluid G flows from the upper side to the lower side. Moreover, upper, lower, left, and right directions in the present description and the claims correspond to upper, lower, left, and right directions when a first check valve 1 is provided as shown in FIG. 1. A movement direction of a valve element 20 is referred to as an axial direction. A direction in which the fluid G flows is not limited to the embodiments.

### Entire Configuration of Check Valve

FIG. 1 is a sectional view showing an entire configuration of the first check valve 1 according to Embodiment 1. In the first check valve 1, the valve element 20 is accommodated in a valve chest 11 formed at a casing 10, and a seat member 30 is accommodated in a seat member accommodating portion 12. The valve chest 11 is formed in a cylindrical shape having a diameter within a predetermined tolerance with respect to an outer diameter of the valve element 20. The seat member accommodating portion 12 has a cylindrical shape that can accommodate the seat member 30. The seat member accommodating portion 12 is larger in diameter than the valve chest 11. The seat member 30 is fixed by being pressed by a pressing member 14 from the upper side toward a step portion 17 formed between the valve chest 11 and the seat member accommodating portion 12. With this, a periphery of the seat member 30 tightly contacts the casing 10. The pressing member 14 is attached to the casing 10 with bolts 16 or the like. An upstream channel 15 is provided at the pressing member 14. The upstream channel 15 communicates with an inlet channel 31 of the seat member 30. A downstream channel 13 is provided at a lower end of the valve chest 11.

The valve element 20 of the present embodiment includes a valve head portion 21 and a guide portion 22. The valve head portion 21 projects toward the seat member 30 and has a small diameter. The guide portion 22 moves in the axial direction along the valve chest 11 and has a large diameter. The valve element 20 includes a spring seat 23 at a downstream side of the guide portion 22. The spring seat 23 has an intermediate diameter, and a spring 25 is arranged at the spring seat 23. The spring 25 biases the valve element 20 toward the seat member 30. The valve element 20 is biased toward the seat member 30 by the spring 25 provided between the spring seat 23 and a step portion 18 provided at the casing 10. An inside channel 24 is provided at the guide portion 22 of the valve element 20 so as to extend from a base portion of the valve head portion 21 to an inside of the guide portion 22. The inside channel 24 is open at a lower end of the valve element 20 and communicates with the downstream channel 13 provided at the casing 10.

According to the first check valve 1, when fluid pressure in the upstream channel 15 becomes higher than fluid pressure in the downstream channel 13 by predetermined pressure, the valve element 20 is pushed downward against biasing force of the spring 25. Then, the fluid G flows from the upstream channel 15 to the downstream channel 13. In the first check valve 1, when the fluid pressure in the downstream channel 13 becomes high or when the fluid pressure in the upstream channel 15 becomes low, the valve element 20 is pressed against the seat member 30 by the biasing force of the spring 25. Thus, the upstream channel 15 is closed.

### Configurations of Seat Member and Valve Element of First Check Valve

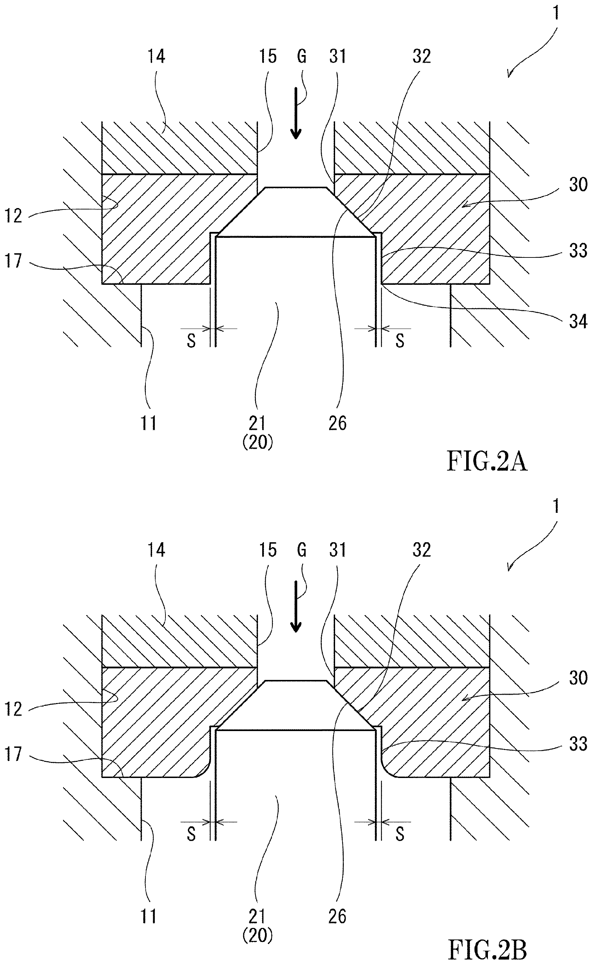

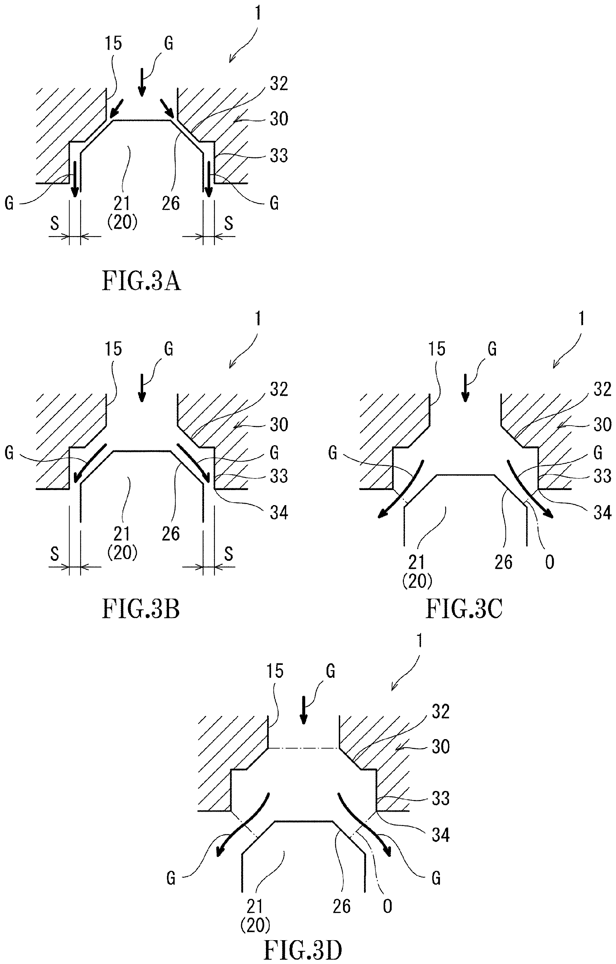

FIG. 2A is a sectional view showing the seat member 30 and valve element 20 of the first check valve 1 shown in FIG. 1, and FIG. 2B is a modified example thereof. FIGS. 3A to 3D are diagrams showing the flow of the fluid G when the valve element 20 separates from the seat member 30 in the first check valve 1. In FIGS. 3A to 3D, a space S is exaggeratingly shown.

As shown in FIG. 2A, the seat member 30 arranged at the upstream channel 15 that is a fluid channel includes, at an inner periphery thereof, the inlet channel 31, a seat portion 32, and a peripheral wall 33. The inlet channel 31 is a small-diameter portion that is continuous with the upstream channel 15. The valve head portion 21 of the valve element 20 contacts the seat portion 32. The peripheral wall 33 is a large-diameter portion that is located around the seat portion 32 and surrounds the valve head portion 21 of the valve element 20. The seat portion 32 is provided between the peripheral wall 33 and the inlet channel 31. The inlet channel 31 is the same in diameter as the upstream channel 15. An opening area of the inlet channel 31 is a maximum opening area through which the fluid G flows. The seat portion 32 is formed in a tapered shape that spreads from the upstream side to the downstream side along the flow of the fluid G The peripheral wall 33 that is the large-diameter portion has an inner diameter larger than an outer diameter of the valve head portion 21 of the valve element 20 which enters into the peripheral wall 33 in the axial direction. The peripheral wall 33 has a parallel cylindrical shape. The predetermined space S is formed between the peripheral wall 33 and the valve head portion 21 of the valve element 20. The fluid G flows through the predetermined space S immediately after the valve element 20 separates from the seat portion 32.

The valve head portion 21 of the valve element 20 includes a sealing portion 26. The sealing portion 26 has a tapered shape that is similar to the seat portion 32 of the seat member 30 or spreads downward at an angle within a range of ±45°. A part of the valve head portion 21 which part is located at a lower side of the sealing portion 26 has a parallel cylindrical shape having such a diameter that the predetermined space S is formed between the part of the valve head portion 21 and the peripheral wall 33 of the seat member 30. The space S is formed such that a diameter of a seat portion-side end portion of the peripheral wall 33 is equal to or less than 1.2 times a diameter of the valve head portion 21 of the valve element 20. More preferably, the space S is formed such that the diameter of the seat portion-side end portion of the peripheral wall 33 is equal to or less than 1.02 times the diameter of the valve head portion 21 of the valve element 20. With this, the cylindrical space S that is continuous in the axial direction is provided between the peripheral wall 33 of the seat member 30 and the valve head portion 21 of the valve element 20. The space S can be set in accordance with the maximum opening area through which the fluid G flows. For example, the space S can be set to about 0.5% to 15% of the maximum opening area. As above, in the first check valve 1, as a configuration by which the opening area is kept small when an axial movement distance of the valve element 20 is short, the peripheral wall 33 is provided at the seat member 30 so as to surround the valve head portion 21.

As shown in FIG. 2B, an end portion (hereinafter referred to as a "downstream end portion 34") of the peripheral wall 33 of the seat member 30 which portion is located opposite to the seat portion 32 may be curved so as to spread in a direction away from the seat portion 32. With this, an increase in the opening area when the valve element 20 separates from the seat member 30 can be changed gently. To be specific, the increase in the opening area at a portion where a change in the flow rate is large can be made gentle. With this, it is possible to prevent a case where a valve passing flow rate increases too much, this steeply decreases an upstream pressure, and therefore, the valve element 20 is biased in a direction toward the seat member 30 beyond necessity. Therefore, the change in the flow rate when the valve head portion 21 of the valve element 20 separates from the seat member 30 can be increased smoothly.

As shown in FIG. 3A, when the valve element 20 moves in the axial direction from the state shown in FIG. 2, and the valve head portion 21 separates from the seat portion 32, the fluid G flows from the upstream channel 15 through the space S to the downstream channel 13. When the valve head portion 21 separates from the seat portion 32 but is located at a position corresponding to the peripheral wall 33, the fluid G flows at a flow rate corresponding to the opening area of the space S between the valve head portion 21 and the peripheral wall 33. As shown in FIG. 3B, until the sealing portion 26 of the valve head portion 21 reaches the downstream end portion 34 of the peripheral wall 33 of the seat member 30, the fluid G flows at the flow rate corresponding to the opening area of the space S between the valve head portion 21 and the peripheral wall 33. As shown in FIG. 3C, after the valve head portion 21 separates from the peripheral wall 33 of the seat member 30, the flow rate of the fluid G increases in accordance with the increase in the opening area of an opening portion O formed between the downstream end portion 34 of the peripheral wall 33 and the sealing portion 26 of the valve head portion 21. As shown in FIG. 3D, when the valve head portion 21 separates from the seat portion 32 by a predetermined distance, the opening area of the opening portion O formed between the downstream end portion 34 of the peripheral wall 33 and the sealing portion 26 of the valve head portion 21 becomes equal to the opening area of the upstream channel 15. Thus, the fluid G flows at the maximum flow rate.

### Opening Area Property of First Check Valve

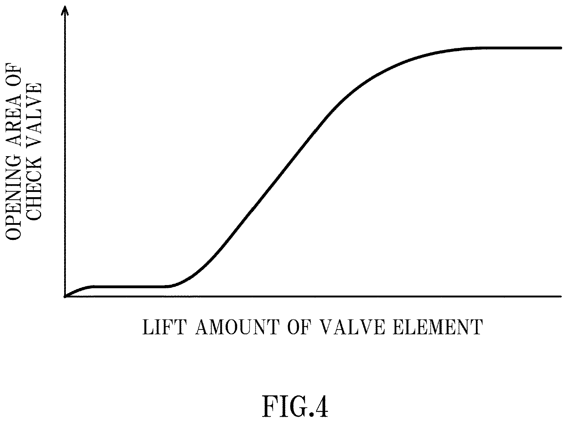

FIG. 4 is a graph showing an opening area property of the first check valve 1 shown in FIGS. 3A to 3D. In FIG. 4, a horizontal axis indicates a lift amount (axial movement distance) of the valve element 20, and a vertical axis indicates the opening area of the first check valve 1. According to the first check valve 1, in a period from immediately after the valve head portion 21 of the valve element 20 separates from the seat portion 32 until when the lift amount becomes a predetermined lift amount, the fluid G flows from the upstream channel 15 to the downstream channel 13 through the space S provided between the peripheral wall 33 of the seat member 30 and the valve head portion 21 of the valve element 20. Therefore, the opening area of the first check valve 1 is small and constant until the lift amount reaches the predetermined lift amount (axial movement distance), and the flow rate of the fluid G flowing through the space S is small until the valve head portion 21 separates from the seat member 30 (FIG. 3B). This prevents a case where the valve passing flow rate increases in accordance with the movement of the valve element 20, and this excessively increases the upstream pressure. As above, the opening area is small while the lift amount of the valve element 20 is small, and this prevents the valve element 20 from being biased in an open direction beyond necessity.

When the valve head portion 21 separates from the downstream end portion 34 of the peripheral wall 33, the opening area increases, and the flow rate of the fluid G flowing from the upstream channel 15 to the downstream channel 13 increases. After that, as the valve head portion 21 separates from the seat member 30, the opening area increases. When the valve head portion 21 separates from the downstream end portion 34 of the peripheral wall 33 by a predetermined distance, the opening area of the opening portion O becomes equal to the opening area of the upstream channel 15. When the valve element 20 moves in the axial direction, and the opening area of the opening portion O becomes equal to the opening area of the upstream channel 15, the flow rate becomes the maximum flow rate.

As above, the first check valve 1 has such opening area property that: when the lift amount of the valve element 20 is small, the opening area is small; and when the lift amount of the valve element 20 is large, an increase gradient of the opening area is a predetermined value or less. To be specific, the first check valve 1 has such opening area property that: when the lift amount is small after the valve element 20 separates from the seat member 30, the opening area is kept small; and when the lift amount of the valve element 20 is large, the opening area is large as with a normal check valve. Therefore, according to the first check valve 1, the portion where the change in the flow rate becomes large is a position where the valve head portion 21 of the valve element 20 separates from the seat portion 32. In addition, since the fluid pressure is changed such that the opening area is changed from the small opening area to the large opening area, the change in the fluid pressure when the opening area increases is made gentle. Moreover, even when the valve element 20 moves to the upstream side or the downstream side, the valve element 20 is prevented from being biased beyond necessity, and the generation of the chattering can be effectively suppressed. Since the maximum opening area by the movement of the valve element 20 in the axial direction can be increased (see FIG. 3D), the pressure loss when the flow rate is high can be reduced.

In addition, the above opening area property is realized in such a manner that: the peripheral wall 33 is provided at the seat member 30; and the valve head portion 21 is formed in a predetermined shape. Therefore, the check valve can be produced at low cost and can have a small size that is similar to the size of a normal check valve.

### Configurations of Seat Member and Valve Element of Second Check Valve

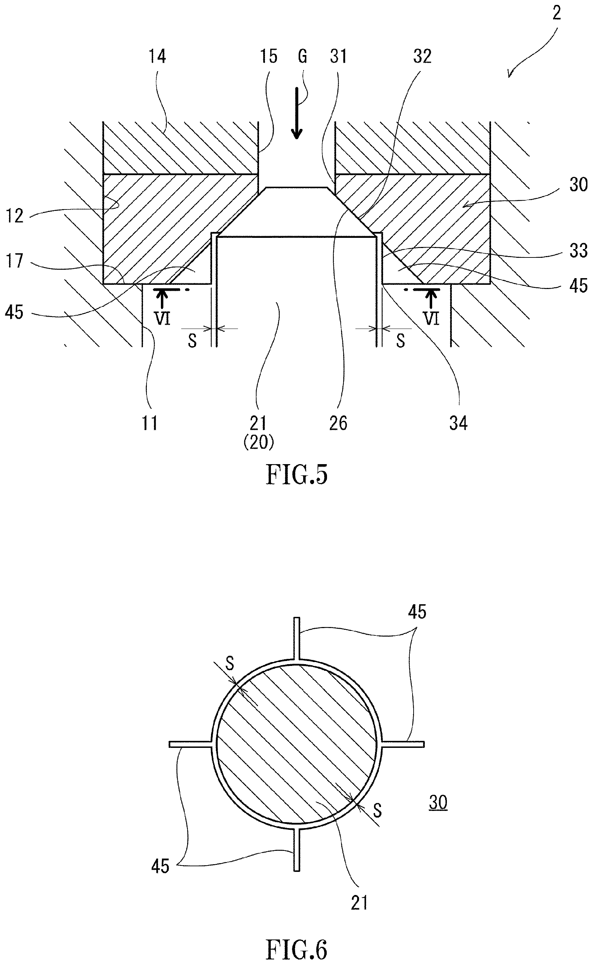

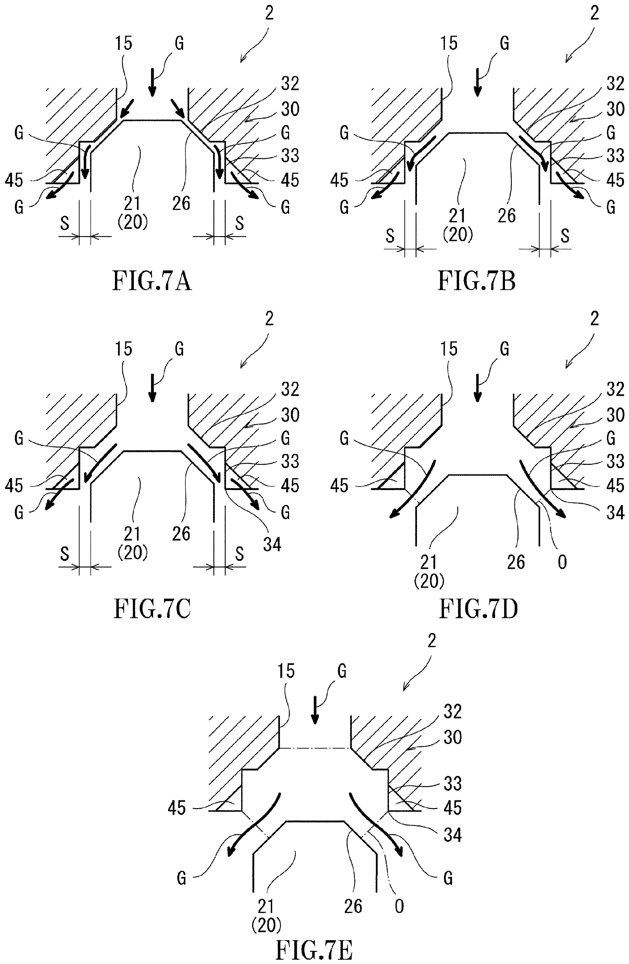

FIG. 5 is a sectional view showing the seat member 30 and valve element 20 of a second check valve 2 according to Embodiment 2. FIG. 6 is a sectional view taken along line VI-VI of FIG. 5. FIGS. 7A to 7E are diagrams showing the flow of the fluid G when the valve element 20 separates from the seat portion 32 in the second check valve 2. The second check valve 2 is a modified example of the first check valve 1 and is different from the first check valve 1 regarding the configuration of part of the seat member 30. In the following description, the same reference signs are used for the same components as in the first check valve 1, and a repetition of the same explanation is avoided. In FIGS. 7A to 7E, the space S is exaggeratingly shown.

As shown in FIG. 5, the seat member 30 of the second check valve 2 includes the inlet channel 31, the seat portion 32, the peripheral wall 33, and slits 45. The inlet channel 31 is continuous with the upstream channel 15. The valve head portion 21 of the valve element 20 contacts the seat portion 32. The peripheral wall 33 is located around the seat portion 32 and surrounds the valve head portion 21 of the valve element 20. The slits 45 are additional passages provided at the peripheral wall 33. Other than the slits 45, the additional passage may be a groove or hole having a triangular shape, a circular shape, or the like or may be formed such that a porous body or fiber through which the fluid can pass is solidified and filled in a cutout, groove, or the like provided at the peripheral wall 33. When the additional passages are the slits 45, machining is easy, and the opening area of the additional passage can be set easily. The inlet channel 31 is formed in a cylindrical shape that is the same in diameter as the upstream channel 15. The opening area of the inlet channel 31 is the maximum opening area through which the fluid G flows. The seat portion 32 is formed in a tapered shape that spreads from the upstream side to the downstream side along the flow of the fluid G The peripheral wall 33 has a parallel cylindrical shape having such a diameter that the predetermined space S can be formed between the peripheral wall 33 and the valve head portion 21.

Each of the slits 45 is formed such that a sectional area thereof increases from the upstream side to the downstream side along the peripheral wall 33. In the present embodiment, the slit 45 is formed to spread at an angle of about 45°. The slit 45 may be provided at one position in a circumferential direction, or the slits 45 may be provided at a plurality of positions in the circumferential direction. As shown in FIG. 6, the slits 45 of the present embodiment are provided at four positions (a plurality of positions) at intervals of 90° so as to be symmetrical about a center axis of the peripheral wall 33. The number of slits 45, the shape and angle of the slit 45, and the position of the slit 45 in the axial direction can be set arbitrarily. An increase amount of the opening area can be set arbitrarily by the setting of the slit 45. These may be set such that the desired opening area property is obtained.

When the slits 45 are provided symmetrically about the center axis of the peripheral wall 33, the the fluid G flowing through the space S between the valve head portion 21 of the valve element 20 and the peripheral wall 33 can be balanced with respect to a center axis of the valve element 20. Therefore, the valve element 20 can easily move on the center axis.

The valve head portion 21 of the valve element 20 includes the sealing portion 26. The sealing portion 26 has a tapered shape that spreads downward at an angle similar to the seat portion 32 of the seat member 30. A part of the valve head portion 21 which part is located at a lower side of the sealing portion 26 has a parallel cylindrical shape having such a diameter that the predetermined space S is formed between the part of the valve head portion 21 and the peripheral wall 33 of the seat member 30. The space S is formed such that the diameter of the seat portion-side end portion of the peripheral wall 33 is equal to or less than 1.2 times the diameter of the valve head portion 21 of the valve element 20. More preferably, the space S is formed such that the diameter of the seat portion-side end portion of the peripheral wall 33 is equal to or less than 1.02 times the diameter of the valve head portion 21 of the valve element 20. With this, the cylindrical space S that is continuous in the axial direction and the slits 45 that increase in the sectional area from the upstream side toward the downstream side are provided between the peripheral wall 33 of the seat member 30 and the valve head portion 21 of the valve element 20. The space S and the slits 45 can be set in accordance with the maximum opening area through which the fluid G flows. For example, the space S can be set to about 0.5% to 15% of the maximum opening area. By the opening areas of the slits 45, the opening area of the downstream side of the peripheral wall 33 can be made larger than the opening area of the seat portion-side end portion of the peripheral wall 33 by about 5% to 40%.

As above, in the second check valve 2, as a configuration by which the opening area is kept small when the axial movement distance of the valve element 20 is short, the peripheral wall 33 is provided at the seat member 30 so as to surround the valve head portion 21, and the slits 45 are provided in the circumferential direction of the peripheral wall 33.

As with the above, in the second check valve 2, the downstream end portion 34 (end portion located opposite to the the seat portion 32) of the peripheral wall 33 of the seat member 30 may be curved so as to spread in a direction away from the seat portion 32 (see FIG. 2B). With this, the increase in the opening area when the valve element 20 separates from the seat member 30 can be changed gently. Therefore, the change in the flow rate when the valve head portion 21 of the valve element 20 separates from the seat member 30 can be increased smoothly.

As shown in FIG. 7A, when the valve element 20 moves in the axial direction from the state shown in FIG. 5, and the valve head portion 21 separates from the seat portion 32, the fluid G flows from the upstream channel 15 through the space S to the downstream channel 13. In this state, the fluid G flows at a flow rate corresponding to the sum of the opening area of the space S and the opening areas of the the slits 45. As shown in FIG. 7B, when the axial movement distance of the valve element 20 increases, and the valve head portion 21 further separates from the seat portion 32, the opening areas of the slits 45 increase. Therefore, the flow rate of the fluid G flowing through the opening area of the space S and the opening areas of the slits 45 increases. As shown in FIG. 7C, the axial movement distance of the valve element 20 increases, and until the sealing portion 26 of the valve head portion 21 reaches the downstream end portion 34 of the peripheral wall 33 of the seat member 30, the opening areas of the slits 45 increase, and the flow rate also increases. Therefore, the flow rate of the fluid G flowing through the opening area of the space S and the opening areas of the slits 45 gently increases until the state shown in FIG. 7C. As shown in FIG. 7D, after the valve head portion 21 separates from the peripheral wall 33 of the seat member 30, the flow rate of the fluid G increases in accordance with an increase in the opening area of the opening portion O formed between the downstream end portion 34 of the peripheral wall 33 and the sealing portion 26 of the valve head portion 21. As shown in FIG. 7E, when the valve head portion 21 separates from the peripheral wall 33 by a predetermined distance, the opening area of the opening portion O formed between the peripheral wall 33 and the valve head portion 21 becomes equal to the opening area of the upstream channel 15. With this, the fluid G flows at the maximum flow rate.

### Opening Area Property of Second Check Valve

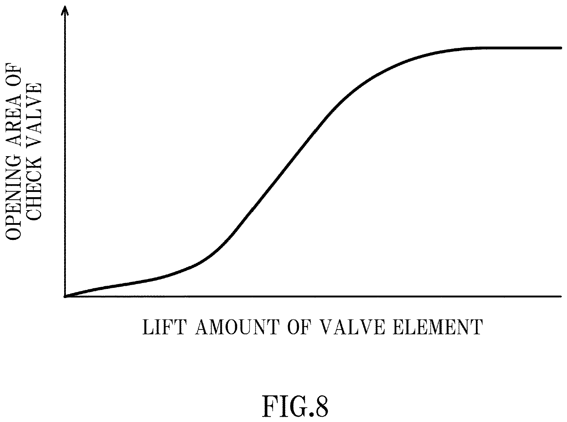

FIG. 8 is a graph showing the opening area property of the second check valve 2 shown in FIGS. 7A to 7E. In FIG. 8, a horizontal axis indicates the lift amount (axial movement distance) of the valve element 20, and a vertical axis indicates the opening area of the second check valve 2. According to the second check valve 2, in a period from immediately after the valve head portion 21 of the valve element 20 separates from the seat portion 32 until when the lift amount becomes a predetermined lift amount, the fluid G flows from the upstream channel 15 to the downstream channel 13 through the space S formed between the peripheral wall 33 of the seat member 30 and the valve head portion 21 of the valve element 20. Moreover, the flow rate of the fluid G flowing through the opening areas of the slits 45 increases in accordance with the lift amount of the valve element 20 (see FIG. 7B). Therefore, the flow rate gently increases until the valve head portion 21 reaches the downstream end portion 34 of the peripheral wall 33. This prevents a case where the valve passing flow rate increases in accordance with the movement of the valve element 20, and this excessively increases the upstream pressure. As above, the opening area increases little by little while the axial movement distance of the valve element 20 is short, and this prevents the valve element 20 from being biased in the open direction beyond necessity.

When the valve head portion 21 separates from the downstream end portion 34 of the peripheral wall 33, the opening area increases, and the flow rate of the fluid G flowing from the upstream channel 15 to the downstream channel 13 increases. After that, as the valve head portion 21 separates from the seat member 30, the opening area increases. When the valve head portion 21 separates from the downstream end portion 34 of the peripheral wall 33 by a predetermined distance, the opening area of the opening portion O becomes equal to the opening area of the upstream channel 15. When the valve element 20 moves in the axial direction, and the opening area of the opening portion O becomes equal to the opening area of the upstream channel 15, the flow rate becomes the maximum flow rate.

As above, the second check valve 2 has such opening area property that: when the lift amount of the valve element 20 is small, the opening area is increased little by little; and when the lift amount of the valve element 20 is large, the increase gradient of the opening area is a predetermined value or less. To be specific, the second check valve 2 has such opening area property that: when the lift amount is small after the valve element 20 separates from the seat member 30, the opening area is gently increased; and when the lift amount of the valve element 20 is large, the opening area is large as with a normal check valve. Therefore, according to the second check valve 2, the portion where the change in the flow rate is large is a position where the valve head portion 21 of the valve element 20 separates from the seat portion 32. In addition, since the fluid pressure is changed such that the opening area is gradually changed from the small opening area to the large opening area, the change in the fluid pressure when the opening area increases is made gentle. Moreover, even when the valve element 20 moves in any direction along the axial direction, the valve element 20 is prevented from being biased beyond necessity, and the generation of the chattering can be effectively suppressed. Since the maximum opening area by the movement of the valve element 20 in the axial direction can be increased (see FIG. 7E), the pressure loss when the flow rate is high can be reduced.

In addition, according to the second check valve 2, the opening area property with respect to the movement distance of the valve element 20 can be easily and arbitrarily changed by changing the number of slits 45, the shape and angle of the slit 45, and the position of the slit 45 in the axial direction. Therefore, the opening area property suitable for a use condition can be easily realized.

In addition, as the configuration by which such opening area property is obtained, the peripheral wall 33 and the slits 45 are provided at the seat member 30, and the valve head portion 21 is formed in a predetermined shape. Therefore, the check valve can be produced at low cost and can have a small size that is similar to the size of a normal check valve.

### Configurations of Seat Member and Valve Element of Third Check Valve

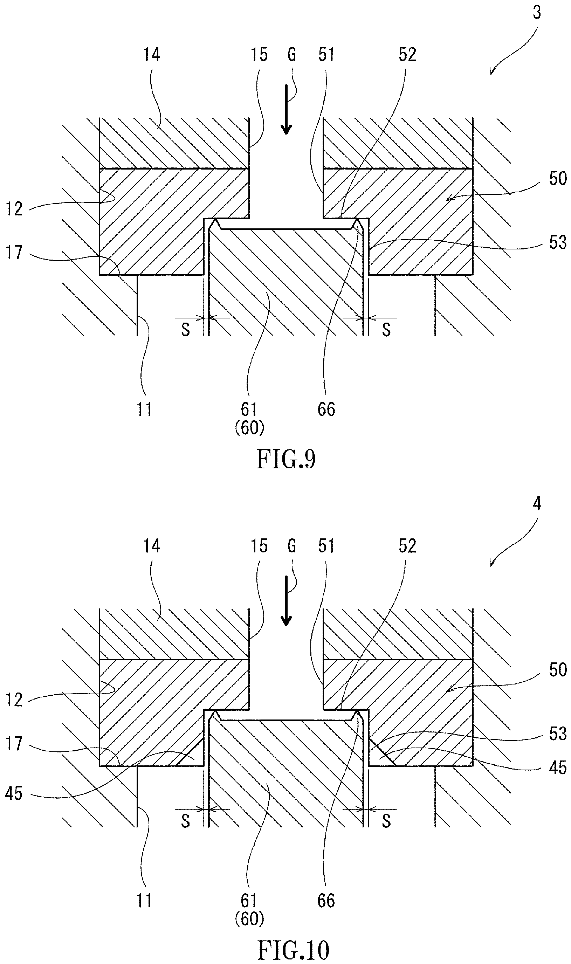

FIG. 9 is a sectional view showing a seat member 50 and valve element 60 of a third check valve 3 according to Embodiment 3. The third check valve 3 is the same as the first check valve 1 of FIG. 2 except for a portion where the seat member 50 and the valve element 60 contact each other. Therefore, the same reference signs are used for the same components, and a repetition of the same explanation is avoided.

As shown in FIG. 9, the seat member 50 of the third check valve 3 includes an inlet channel 51, a seat portion 52, and a peripheral wall 53. The inlet channel 51 is continuous with the upstream channel 15. A valve head portion 61 of the valve element 60 contacts the seat portion 52. The peripheral wall 53 is located around the seat portion 52 and surrounds the valve head portion 61 of the valve element 60. The inlet channel 51 has a circular shape that is the same in diameter as the upstream channel 15. The opening area of the inlet channel 51 is the maximum opening area through which the fluid G flows. The seat portion 52 is formed as a flat surface perpendicular to a center axis of the upstream channel 15. The peripheral wall 53 has a parallel cylindrical shape having such a diameter that the predetermined space S can be formed between the peripheral wall 53 and the valve head portion 61.

An upper surface of the valve head portion 61 of the valve element 60 is formed as a flat surface perpendicular to a center axis of the valve element 60. A sealing portion 66 is provided at an outer peripheral portion of the upper surface of the valve head portion 61. The sealing portion 66 projects so as to contact the seat portion 52. The valve head portion 61 has a parallel cylindrical shape having such a diameter that the predetermined space S is formed between the valve head portion 61 and the peripheral wall 53 of the seat member 50. The space S is formed such that a diameter of a seat portion-side end portion of the peripheral wall 53 is equal to or less than 1.2 times a diameter of the valve head portion 61 of the valve element 60. More preferably, the space S is formed such that the diameter of the seat portion-side end portion of the peripheral wall 33 is equal to or more than 1.02 times the diameter of the valve head portion 21 of the valve element 20. With this, the space S that is continuous in the axial direction is provided between the peripheral wall 53 of the seat member 50 and the valve head portion 61 of the valve element 60. The space S can be set in accordance with the maximum opening area. For example, the space S can be set to about 0.5% to 15% of the maximum opening area.

Since the opening area property of the third check valve 3 is the same as the opening area property of the first check valve 1 shown in FIG. 4, an explanation thereof is omitted. According to the third check valve 3, when the lift amount (axial movement distance) is small immediately after the valve element 60 separates from the seat portion 52, the opening area is gently increased. Moreover, when the lift amount of the valve element 60 is large, the opening area is large. Therefore, according to the third check valve 3, the portion where the change in the flow rate is large is a position where the valve head portion 61 of the valve element 60 separates from the seat portion 52. Thus, the generation of the chattering can be suppressed. Since the maximum opening area by the movement of the valve element 60 in the axial direction can be increased, the pressure loss when the flow rate is high can be reduced.

### Configurations of Seat Member and Valve Element of Fourth Check Valve

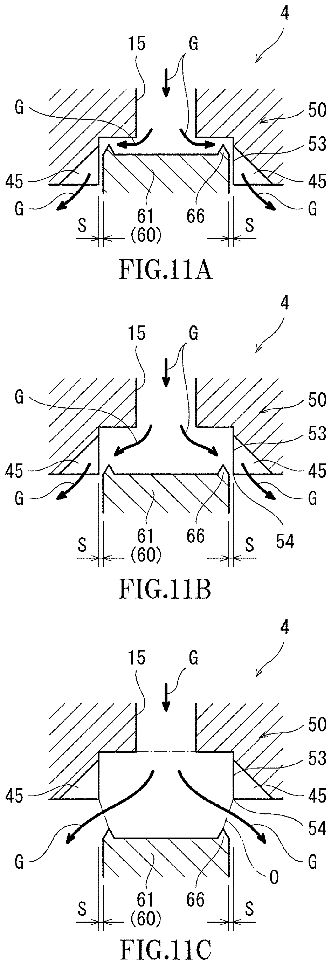

FIG. 10 is a sectional view showing the seat member 50 and valve element 60 of a fourth check valve 4 according to Embodiment 4. FIGS. 11A to 11C are diagrams showing the flow of the fluid G when the valve element 60 separates from the seat portion 52 in the fourth check valve 4. The fourth check valve 4 is a modified example of the third check valve 3 and is different from the third check valve 3 regarding the configuration of part of the seat member 50. In the following description, the same reference signs are used for the same components as in the third check valve 3, and a repetition of the same explanation is avoided.

The peripheral wall 53 of the seat member 50 of the fourth check valve 4 includes the slits 45. Each of the slits 45 is an additional passage having a sectional area that increases from the upstream side to the downstream side. As with the second check valve 2, the slit 45 may be provided at one position in the circumferential direction, or the slits 45 may be provided at a plurality of positions in the circumferential direction. A required number of slits 45 can be provided in accordance with a desired opening area.

As shown in FIG. 11A, the valve element 60 moves in the axial direction from the state shown in FIG. 10, and immediately after the valve head portion 61 separates from the seat portion 52, the fluid G flows from the upstream channel 15 through the space S to the downstream channel 13. In this state, the fluid G flows at a flow rate corresponding to the sum of the opening area of the space S and the opening areas of the slits 45. As shown in FIG. 11B, the axial movement distance of the valve element 20 increases, and until the sealing portion 66 of the valve head portion 61 reaches a downstream end portion 54 of the peripheral wall 53 of the seat member 50, the opening areas of the slits 45 increase. Therefore, the flow rate of the fluid G flowing through the opening area of the space S and the opening areas of the slits 45 gently increases. As shown in FIG. 11C, after the valve head portion 61 separates from the peripheral wall 53 of the seat member 50, the flow rate of the fluid G increases in accordance with an increase in the opening area of the opening portion O formed between the downstream end portion 54 of the peripheral wall 53 and the sealing portion 66 of the valve head portion 61. After that, the opening area of the opening portion O formed between the downstream end portion 54 of the peripheral wall 53 and the sealing portion 66 of the valve head portion 61 becomes equal to the opening area of the upstream channel 15. With this, the fluid G flows at the maximum flow rate.

The fourth check valve 4 includes the slits 45. With this, when the axial movement distance of the valve element 60 is short, the opening areas of the slits 45 are added to the opening area of the space S formed between the valve head portion 61 of the valve element 60 and the peripheral wall 53 of the seat member 50. In addition, as with the second check valve 2, the opening area increased by the slits 45 gently increases in accordance with the movement of the valve element 60 in the axial direction. This prevents a case where the valve passing flow rate increases in accordance with the movement of the valve element 60, and this excessively increases the upstream pressure. Therefore, the opening area property of the fourth check valve 4 can be set to be the same as the opening area property (FIG. 8) of the second check valve 2.

According to the fourth check valve 4, when the lift amount (axial movement distance) is small immediately after the valve element 60 separates from the seat portion 52, the opening area is gently increased. Moreover, when the lift amount of the valve element 60 is large, the opening area is large. Therefore, according to the fourth check valve 4, the portion where the change in the flow rate is large is a position where the sealing portion 66 of the valve element 60 separates from the seat portion 52 of the seat member 50. Thus, the generation of the chattering can be suppressed. Since the maximum opening area by the movement of the valve element 60 in the axial direction can be increased (FIG. 11C), the pressure loss when the flow rate is high can be reduced.

### Configurations of Seat Member and Valve Element of Fifth Check Valve

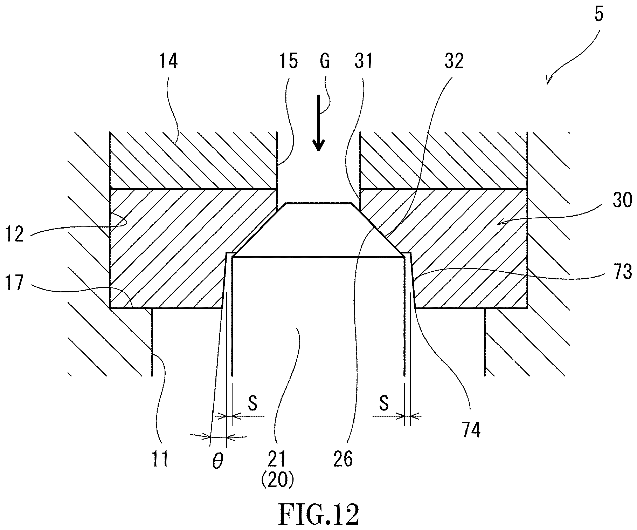

FIG. 12 is a sectional view showing the seat member 30 and valve element 20 of a fifth check valve 5 according to Embodiment 5. The fifth check valve 5 is a modified example of the first check valve 1 and is different from the first check valve 1 regarding the configuration of part of the seat member 30. In the following description, the same reference signs are used for the same components as in the first check valve 1, and a repetition of the same explanation is avoided.

A peripheral wall 73 of the seat member 30 of the fifth check valve 5 has such a conical shape that an inner diameter of the peripheral wall 73 spreads toward the downstream side at an angle θ, the space S being formed between the peripheral wall 73 and the valve head portion 21 of the valve element 20. This portion spreading in the conical shape also serves as the additional passage having a sectional area that increases. In the fifth check valve 5, the space S and the additional passage are integrated with each other. According to the fifth check valve 5, the space S is formed such that a diameter of a seat portion-side end portion of the space S is equal to or less than 1.2 times the diameter of the valve head portion 21 of the valve element 20. More preferably, the space S is formed such that the diameter of the seat portion-side end portion of the peripheral wall 33 is equal to or less than 1.02 times the diameter of the valve head portion 21 of the valve element 20. In FIG. 12, the spreading angle θ of the peripheral wall 73 is exaggeratingly shown. For example, the angle θ at which the peripheral wall 73 spreads can be set such that the opening area of the downstream side of the peripheral wall 73 is larger than the opening area of the seat portion-side end portion of the peripheral wall 73 by about 0.5% to 15%.

According to the fifth check valve 5, after the valve head portion 21 of the valve element 20 separates from the seat portion 32 of the seat member 30, the opening area of the space S can be gently increased in accordance with the movement of the valve head portion 21 in the axial direction. To be specific, the valve element 20 moves to the downstream side, and until the valve head portion 21 separates from a downstream end portion 74 of the peripheral wall 73, the opening area of the space S can be gradually increased. Therefore, the opening area property of the fifth check valve 5 can be set to be the same as the opening area property of the second check valve 2.

According to the fifth check valve 5, when the lift amount (axial movement distance) is small immediately after the valve element 20 separates from the seat portion 32, the opening area is gently increased. Moreover, when the lift amount of the valve element 20 is large, the opening area is large. Therefore, according to the fifth check valve 5, the portion where the change in the flow rate is large is a position where the valve head portion 21 of the valve element 20 separates from the seat portion 32. Thus, the generation of the chattering can be suppressed. Since the maximum opening area by the movement of the valve element 20 in the axial direction can be increased, the pressure loss when the flow rate is high can be reduced.

### Conclusion

As above, according to the check valves 1 to 5 of the above embodiments, the fluid G flows at a low flow rate immediately after the valve head portion (21, 61) of the valve element (20, 60) separates from the seat portion (32, 52), and this can prevent the valve element (20, 60) from being biased beyond necessity. Then, the portion where the chattering tends to occur and the change in the flow rate is large can be set to the position where the valve head portion (21, 61) separates from the seat portion (32, 52). With this, the check valves 1 to 5 having the appropriate channel area property and capable of suppressing the generation of the chattering can be configured.

By suppressing the generation of the chattering, the vibration of the check valves 1 to 5 and the collision of the check valves 1 to 5 caused by the vibration can be suppressed. By suppressing the collision of the valve, the durability of the components (the valve elements, the seat portions, the springs, etc.) of the check valves 1 to 5 can be improved. Moreover, pulsation and vibration of connection pipes due to the vibration of the valve and influence on connection devices can be reduced.

In addition, each of the check valves 1 to 5 capable of suppressing the generation of the chattering can be configured as a small valve including a small number of components. Moreover, since the maximum opening area of the valve element (20, 60) can be made large, the pressure loss when the flow rate is high can be reduced.

Therefore, according to the check valves 1 to 5, the chattering can be effectively suppressed not only in check valves incorporated in gas tank control valves but also in hydraulic devices, pneumatic devices, various types of plant control, and the like including channels through which the fluid G (gas or liquid, such as water) flows.

### Other Modified Examples

The valve elements 20 and 60 of the above embodiment are examples, and the form of the additional passage through which the fluid G flows can be changed to any form other than the slit 45. The forms of the valve head portions 21 and 61 are not limited to the forms in the above embodiments.

In the above embodiments, the seat member (30, 50) includes the peripheral wall (33, 53). However, the peripheral wall (33, 53) may be formed separately. The seat portion (32, 52) and the peripheral wall (33, 53) may be included in the casing 10.

Moreover, the seat portion (32, 52) of the seat member (30, 50) and the sealing portion (26, 66) of the valve element (20, 60) may be configured such that: the seat portion (32, 52) is made of a soft material, and the sealing portion (26, 66) is made of a hard material; or the seat portion (32, 52) is made of a hard material, and the sealing portion (26, 66) is made of a soft material. The materials of the seat portion (32, 52) and the sealing portion (26, 66) are not limited.

The above embodiments are examples. Various modifications and the combinations of the embodiments may be made within the scope of the present invention. The present invention is not limited to the above embodiments.

### Reference Signs List

- 1: first check valve
- 2: second check valve
- 3: third check valve
- 4: fourth check valve
- 5: fifth check valve
- 10: casing
- 11: valve chest
- 12: seat member accommodating portion
- 13: downstream channel
- 15: upstream channel
- 20: valve element
- 21: valve head portion
- 22: guide portion
- 26: sealing portion
- 30: seat member
- 31: inlet channel (small-diameter portion)
- 32: seat portion
- 33: peripheral wall (large-diameter portion)
- 34: downstream end portion
- 45: slit (additional passage)
- 50: seat member
- 51: inlet channel
- 52: seat portion
- 53: peripheral wall
- 54: downstream end portion
- 55: sealing portion
- 60: valve element
- 61: valve head portion
- 66: sealing portion
- 73: peripheral wall
- 74: downstream end portion
- S: space
- O: opening portion
- G: fluid

## Claims

1. A check valve comprising:
a seat member arranged at a channel of a fluid, the seat member including a large-diameter portion, a small-diameter portion, and a seat portion, the large-diameter portion and the small-diameter portion being provided at an inner periphery of the seat member, the seat portion being provided between the large-diameter portion and the small-diameter portion;
a valve element pressed against the seat portion to close the channel; and
a casing including a valve chest accommodating the valve element such that the valve element is movable in an axial direction, wherein:
the large-diameter portion has an inner diameter larger than an outer diameter of the valve element which enters into the large-diameter portion in the axial direction;
a space through which the fluid flows is formed between the large-diameter portion and the valve element; and
the diameter of the large-diameter portion is equal to or less than 1.2 times the diameter of the valve element.

2. A check valve comprising:
a seat member arranged at a channel of a fluid, the seat member including a large-diameter portion, a small-diameter portion, and a seat portion, the large-diameter portion and the small-diameter portion being provided at an inner periphery of the seat member, the seat portion being provided between the large-diameter portion and the small-diameter portion;
a valve element pressed against the seat portion to close the channel; and
a casing including a valve chest accommodating the valve element such that the valve element is movable in an axial direction, wherein:
the large-diameter portion has an inner diameter larger than an outer diameter of the valve element which enters into the large-diameter portion in the axial direction;
a space through which the fluid flows is formed between the large-diameter portion and the valve element; and
a peripheral wall of the large-diameter portion includes an additional passage having a sectional area that increases from an upstream side toward a downstream side along flow of the fluid.

3. The check valve according to claim 2, wherein the additional passage comprises a plurality of additional passages arranged symmetrically about a center axis of the large-diameter portion.

4. The check valve according to any one of claims 1 to 3, wherein an end portion of the large-diameter portion which end portion is located opposite to the seat portion is curved at an arbitrary curvature so as to spread outward in a radial direction as the end portion of the large-diameter portion extends away from the seat portion.
